# FASCICULE DE BREVET EUROPEEN

(11) **EP 4 120 029 B1**
(45) Date de publication et mention de la délivrance du brevet: **30.04.2025**
(21) Numéro de dépôt: 21186201.6
(22) Date de dépôt: 16.07.2021
(51) Int. Cl.: G04B 37/00, G04B 37/12, G04B 39/00, G04B 43/00, G04G 17/08

(54) **DISPOSITIF DE DEWAR COMPRENANT UN ÉLÉMENT D'HABILLAGE TRANSPARENT**
DEWARGEFÄSS, DAS EIN TRANSPARENTES VERKLEIDUNGSELEMENT UMFASST
DEWAR DEVICE COMPRISING A TRANSPARENT TRIM ELEMENT

(43) Date de publication de la demande: 18.01.2023
(73) Titulaire: Omega SA, 2502 Biel/Bienne (CH)
(72) Inventeur: GIMKIEWICZ, Christiane, 85737 Ismaning (DE)
(74) Mandataire: ICB SA

(56) Documents cités:
- EP-A1- 3 835 884
- WO-A1-2011/038680
- WO-A1-2015/055824
- US-A1- 2009 297 851

## Description

### Domaine technique de l'invention

La présente invention concerne un dispositif de Dewar pour des composants mécaniques et/ou fonctionnels d'une montre, le dispositif comprenant un élément d'habillage transparent.

### Arrière-plan technologique

Une montre telle que par exemple une montre électronique comprend classiquement un bracelet et une boîte de montre comportant plusieurs composants électriques ou électroniques. Il est connu dans l'état de la technique que certains de ces composants ne supportent pas des températures extrêmes, et cessent de fonctionner correctement à ces températures. Typiquement, les écrans à cristaux liquides LCD (de l'anglais Liquid Crystal Display) utilisant des diodes électroluminescentes ou encore les quartz tolèrent des températures n'excédant pas 80 °C (degrés Celcius) environ, et ne descendant pas en-dessous de 0 °C. Or, dans des environnements particuliers tels que par exemple les missions spatiales ou lunaires, les températures peuvent fréquemment atteindre des valeurs de l'ordre de sensiblement -150 °C à +125 °C.

Il existe donc un besoin de pouvoir utiliser une montre notamment une montre électronique dans des environnements où peuvent régner de telles températures extrêmes.

### Résumé de l'invention

L'invention concerne un dispositif de Dewar pour des composants mécaniques et/ou fonctionnels d'une montre, ledit dispositif étant pourvu d'un bracelet et d'un boitier comportant une enceinte dans laquelle est susceptible d'être agencée une boite de ladite montre et au moins un dispositif de fixation fixant ladite boite de montre dans ladite enceinte du boitier en la maintenant éloignée de l'ensemble des éléments du boitier définissant cette enceinte, ledit ensemble comprenant au moins un élément d'habillage transparent en matériau céramique transparente notamment en matériau céramique polycristalline transparente.
Dans d'autres modes de réalisation :
- ledit au moins un élément d'habillage transparent est fabriqué en matériau céramique comprenant essentiellement de l'oxynitrure d'aluminium ;
- ledit au moins un élément d'habillage transparent est fabriqué en matériau céramique comprenant essentiellement de l'alumine-magnésie ;
- ledit au moins un élément d'habillage transparent est fabriqué en matériau céramique comprenant essentiellement de l'oxyde d'yttrium ;
- ledit au moins un élément d'habillage transparent est fabriqué en matériau céramique comprenant essentiellement du grenat d'yttrium et d'aluminium ;
- ledit au moins un élément d'habillage transparent est réalisé par frittage d'une pièce brute ayant une forme générale semblable à celle dudit élément d'habillage, ladite pièce brute étant formée essentiellement d'une poudre ou d'un mélange de poudres de matériau céramique comprenant essentiellement de l'oxynitrure d'aluminium, de l'alumine-magnésie, de l'oxyde d'yttrium et/ou du grenat d'yttrium et d'aluminium ;
- ledit au moins un élément d'habillage transparent présente un indice de dureté de Vickers compris entre 1223 et 1632 kgf.mm⁻² et de préférence est de 1530 kgf.mm⁻²;
- ledit au moins un élément d'habillage transparent présente un facteur de transmission de la lumière dans le spectre visible qui est d'environ 85% pour une épaisseur d'environ 2 mm ;
- l'élément d'habillage présente un coefficient d'absorption de la lumière dans le spectre visible qui ne dépasse pas 65% après frittage et polissage ;
- ledit au moins un élément d'habillage transparent est une glace dont la surface est sensiblement supérieure ou strictement supérieure à une glace de la boite de montre ;
- une glace de la boite de montre est disposée en regard d'une glace du boitier lorsque la boite de montre est agencée dans ladite enceinte ;
- ladite enceinte est sous vide ou quasi sous vide ;
- ledit au moins un dispositif de fixation est agencé sur une paroi périphérique intérieure de l'enceinte du boitier.

### Brève description des figures

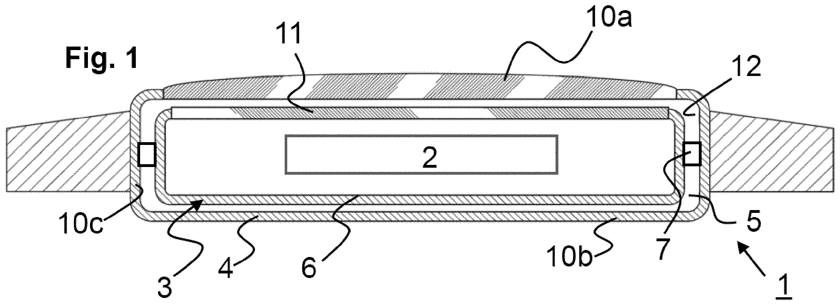

D'autres particularités et avantages ressortiront clairement de la description qui en est faite ci-après, à titre indicatif et nullement limitatif, en référence à la figure 1 qui est une vue en coupe d'une représentation schématique d'un dispositif de Dewar pour des composants mécaniques et/ou fonctionnels d'une montre pourvu d'un élément d'habillage transparent telle qu'une glace, selon un mode de réalisation de l'invention.

### Description détaillée de l'invention

La figure 1 montre une représentation schématique d'un dispositif horloger isotherme 1 pour des composants mécaniques et/ou fonctionnels 2 d'une montre 3 telle qu'une montre mécanique, une montre électronique ou encore une montre hybride. Ce dispositif horloger isotherme 1 est aussi nommé « dispositif horloger de Dewar » ou plus simplement dans la suite de la description « dispositif de Dewar ». Un tel dispositif de Dewar 1 est apte à participer à conférer notamment une bonne isolation thermique à des composants mécaniques et/ou fonctionnels 2 de la montre 3 dont la boite 6 est agencée dans le boitier 4 de ce dispositif 1.

Ce dispositif de Dewar 1 comprend au moins un élément d'habillage transparent 10a tel qu'une glace/verre ou un fond. Ainsi que nous le verrons dans la suite, un tel élément d'habillage transparent 10a est réalisé en un matériau présentant simultanément de bonnes propriétés mécanique, thermique, de résistance aux radiations et aux dommages causés par divers acides, bases et eau ainsi qu'une bonne transparence. Cet élément d'habillage 10a est réalisé en un matériau transparent qui est susceptible d'entraîner une transmission, évaluée par le facteur de transmission Y, supérieur à 68% inclus, voire supérieur à 85% inclus, d'un rayonnement lumineux comprenant au moins des longueurs d'onde du visible. Par « matériau transparent », nous considérons un matériau dont la nature, combinée à l'épaisseur utilisée, permet la transmission au moins partielle du rayonnement lumineux précité.

Un tel élément d'habillage 10a est réalisé en un matériau céramique transparente réfractaire en particulier notamment en matériau céramique polycristalline transparente. Ce matériau peut être constitué des éléments suivants : oxynitrure d'aluminium, alumine-magnésie, oxyde d'yttrium ou grenat d'yttrium et d'aluminium ou encore d'une combinaison d'au moins deux de ces éléments. Plus particulièrement, cet élément d'habillage est fabriqué par frittage d'une pièce brute ayant une forme générale semblable à celle de l'élément d'habillage 10a. La pièce brute est formée essentiellement à partir d'une poudre ou d'un mélange de poudres de matériau céramique, et le cas échéant, d'un liant, qui une fois frittée et polie présente des caractéristiques de transparence dans le spectre visible. Cette poudre ou le mélange de poudres comprend essentiellement le matériau céramique transparent comportant essentiellement de l'oxynitrure d'aluminium, de l'alumine-magnésie, de l'oxyde d'yttrium et/ou du grenat d'yttrium et d'aluminium de l'oxynitrure d'aluminium. Cette poudre ou le mélange de poudres peut comprendre bien entendu le cas échéant un certain nombre d'éléments d'addition en faible quantité pour obtenir des pièces avec des propriétés spécifiques. Ces éléments d'addition et leurs effets sont bien connus des hommes du métier.

L'élément d'habillage 10a ainsi réalisé est bien entendu complètement transparent dans le spectre visible après frittage et participe à protéger la boite 6 de montre 3 qui est agencée dans l'enceinte 5 du boitier 4 et en particulier les composants mécaniques et/ou fonctionnels 2 compris dans cette boite 6.

Cet élément d'habillage 10a tel que la glace 10a peut être réalisé par exemple selon le procédé de fabrication décrit dans le brevet FR 2'556'711 qui utilise comme matériau de départ un mélange de poudres de matériau céramique comprenant essentiellement de l'oxynitrure d'aluminium, de l'alumine-magnésie, de l'oxyde d'yttrium et/ou du grenat d'yttrium et d'aluminium.

A titre d'exemple, lorsque le matériau céramique comprend essentiellement de l'oxynitrure d'aluminium, la composition de cet élément d'habillage est la suivante Al23-1/xO27+xN5-x, x étant compris entre 0,429 et 2.

Un tel élément d'habillage présente un indice de dureté de Vickers compris entre 1223 et 1632 kgf.mm⁻² et de préférence est de 1530 kgf.mm⁻².

Par ailleurs, son facteur de transmission de la lumière dans le spectre visible qui est fonction de la réflexion et de l'absorption de cette lumière, est d'environ 85% pour une épaisseur d'environ 2 mm.

Cet élément d'habillage présente un coefficient d'absorption de la lumière dans le spectre visible qui ne dépasse pas 65% après frittage et polissage.

En outre, cet élément d'habillage transparent présente en comparaison à des éléments d'habillage transparents de l'état de la technique en verre de quartz, verre saphir ou encore en verre en plastique :
- une très bonne résistance à d'éventuelles ruptures dites fragiles, c'est à dire sans déformation plastique ;
- une très bonne résistance chimique ;
- une très bonne résistance thermique en ayant un point de fusion élevé ;
- une très bonne résistance aux radiations (en anglais « radiation hardening »).

Le dispositif de Dewar 1 ici décrit est notamment formé par la combinaison de son boitier 4 et de la boite 6 de montre 3 afin de réaliser une isolation thermique idoine pour ces composants mécaniques et/ou fonctionnels 2. Dans cette configuration, la boite 6 de montre 3 est agencée dans une enceinte 5 du boitier 4 en étant maintenue éloignée ou à distance de l'ensemble des éléments 10a à 10c du boitier 4 définissant cette dite enceinte 5 à savoir l'élément d'habillage tel que la glace 10a, une paroi périphérique intérieure 12 d'une carrure 10c et un fond 10b de ce boitier 4. On notera que cette paroi périphérique intérieure 12 est aussi celle de ladite enceinte 5.

Cet éloignement ou cette distance ou encore cet écartement est configuré (e) à partir d'au moins un dispositif de fixation 7 de la boite 6 de montre 3 dans le boitier 4. Autrement dit, le dispositif de fixation 7 est apte à configurer un écartement entre ladite boite 6 et l'ensemble des éléments 10a, 10b, 10c du boitier 4 formant ladite enceinte 5 de ce boitier 4. Ce dispositif de fixation 7 participe à réduire voire à supprimer toute conduction thermique entre la paroi périphérique intérieure 12a de la carrure 10c et/ou le fond 10b et/ou la glace 10a avec la boite 6 de montre 3 en particulier avec une face globale externe de cette boite 6. Cette face globale externe comporte une face supérieure comprenant la glace 11 de la boite 6 de cette montre 3, une face inférieure comprenant un fond de ladite boite 6 et une paroi périphérique externe d'une carrure de cette boite 6. On comprend que les faces inférieure et supérieure sont opposées l'une à l'autre. On notera que le dispositif de fixation 7 est agencé sur une paroi périphérique intérieure 12 de l'enceinte du boitier 4. Dans cette configuration le dispositif de fixation 7 relie mécaniquement, notamment de manière réversible, la boite 6 de montre 3 à la paroi périphérique intérieure 12 de l'enceinte du boitier 4. En outre, le dispositif de Dewar 1 peut comprendre deux dispositifs de fixation 7 agencés dans l'enceinte en étant opposés l'un à l'autre.

On notera qu'une telle boite 6 est comprise dans une montre 3 qui peut être une montre électronique par exemple une montre à quartz, ou encore une montre mécanique.

Les composants mécaniques et/ou fonctionnels 2 de la montre 3, évoqués précédemment, comprennent de manière non limitative et non exhaustive : un mouvement horloger, un cadran, des aiguilles, des bagues, joints et/ou des composants électroniques et/ou électriques 2. On remarquera en particulier que de tels composants électroniques et/ou électriques 2 comportent par exemple un dispositif d'affichage, un processeur, une mémoire, un composant de stockage d'énergie, un moteur, un circuit intégré et un oscillateur électronique, etc...

En complément, on notera que les principaux composants mécaniques sont ceux du mouvement et comprennent de manière non limitative et non exhaustive :
- le ressort de barillet qui est la source de la force mécanique ;
- le balancier qui oscille et divise ainsi le temps en portions égales ;
- l'échappement qui transforme la force du ressort en impulsion ;
- le rouage qui transmet la force mécanique ;
- la tige de remontoir (pour le remontage manuel) ou le rotor (pour le remontage automatique).

On comprend donc que dans cette configuration, ce dispositif de Dewar 1 présente les mêmes propriétés et caractéristiques qu'un tube/vase de Dewar bien connu dans l'état de la technique. Ainsi que nous l'avons précédemment évoqué, les propriétés et caractéristiques de ce dispositif de Dewar 1 participent à lui conférer une bonne isolation thermique au regard de températures notamment extrêmes pouvant régner dans l'environnement extérieur dans lequel un tel dispositif 1 peut être localisé.

Dans ce contexte, ce dispositif 1 comprend donc le boitier 4 qui comporte la carrure 10c sur laquelle est monté un bracelet permettant à un utilisateur de ce dispositif 1 de le porter. Ce boitier 4 comporte aussi l'élément d'habillage transparent ici la glace 10a et le fond 10b mentionnés plus avant. Dans ce dispositif 1, on notera que la glace 10a comprend de préférence une surface qui est sensiblement supérieure ou strictement supérieure à une glace 11 de la boite 6 de montre 3.

Ainsi que nous l'avons vu, la glace 10a, la carrure 10c et le fond 10b de ce dispositif 1 définissent ensemble l'enceinte 5 de ce boitier 4 qui est susceptible de recevoir la boite 6 de montre 3. Ces trois éléments 10a à 10c du boitier 4 à savoir la carrure 10c, la glace 10a et le fond 10b peuvent être des éléments distincts qui sont joints ensemble pour construire cette enceinte 5. De manière alternative, la carrure 10c et le fond 10b du boitier 4 peuvent former ensemble une pièce monobloc, ladite pièce monobloc définissant une ouverture opposée au fond 10b qui est susceptible d'être refermée par la glace 10a et ce, de manière réversible et étanche. Dans une alternative, la carrure 10c et la glace 10a du boitier4 de montre 3, peuvent former ensemble une pièce monobloc, ladite pièce monobloc définissant une ouverture opposée à la glace 10a qui est susceptible d'être refermée par le fond 10b et ce, aussi de manière réversible et étanche.

La carrure 10c ou le fond 10b peuvent être également comme la glace 10a un élément d'habillage transparent du boitier 4 du dispositif de Dewar. Dans une telle configuration, la paroi périphérique 12 de la carrure 10c et la face intérieure du fond 10b peuvent être revêtues d'un enduit réfléchissant métallique ou similaire, tel que par exemple d'une couche d'argent.

On notera cependant que la carrure 10c ou le fond 10b sont de préférence réalisés de manière non limitative et non exhaustive en une matière métallique ou en des résines polymères thermodurcissables ou thermoplastiques renforcées de fibres de carbone ou de verre ou encore en matériaux céramiques.

En complément, le dispositif 1 peut comprendre un filtre interférométrique agencé sur une face globale externe du boitier 4 à savoir sur une paroi périphérique extérieure de la carrure 10c et/ou des faces extérieures de la glace 10a et du fond 10b de cette boite 6 de montre 3. Ce filtre interférométrique peut être un grillage ou un treillis formant un revêtement sur cette face globale externe du boitier 4. Ce grillage ou treillis présente un maillage dont les dimensions sont telles qu'elles ne laissent passer que certaines longueurs d'onde prédéterminées du spectre électromagnétique, typiquement les longueurs d'onde du domaine visible. On notera que ce grillage est apte à réfléchir au moins un rayonnement ultraviolet et/ou infrarouge voire de proche infrarouge (plus connu sous l'acronyme « NIR »).

En outre lorsque le dispositif 1 est prévu pour être utilisé dans un environnement comprenant de l'air, l'enceinte 5 du boitier 4 comprenant la boite 6 de montre, est sous vide ou quasi sous vide. Autrement dit, dans cette enceinte, l'espace défini entre cette boite 6 et la paroi périphérique intérieure 12 de la carrure 10c, le fond 10b et la glace 10a est vide de matière ou quasi vide. On notera que lorsque ce dispositif 1 est utilisé dans un environnement dépourvu d'air ou sensiblement dépourvu, son enceinte peut ne pas être sous vide, ou au contraire être aussi sous vide ou quasi sous vide.

Ainsi, l'élément d'habillage ici la glace équipant ce dispositif de Dewar 1, participe à fournir aux composants mécaniques et/ou fonctionnels 2 de la montre 3 une très bonne isolation thermique vis-à-vis de l'environnement extérieur en réduisant voire en empêchant une déperdition thermique par radiation des composants agencés dans la boite 6 de montre pendant une longue durée. Ainsi, lorsque la température à l'extérieur du dispositif 1 atteint des valeurs extrêmes, typiquement de l'ordre de -125 à +125 °C, la température à l'intérieur de l'enceinte 5 reste quant à elle sensiblement égale à la température présente dans la boite 6 de montre 3 lors de son agencement dans le boitier 4, typiquement de l'ordre de 20 °C. On notera que quelles que soient les conditions de température régnant dans l'environnement du dispositif de Dewar 1, la température présente dans la boite 6 de montre 3 est une température qui n'entrave pas le bon fonctionnement de la montre. Cette température est maintenue sur une durée qui est 5 à 18 fois plus importante que la durée pendant laquelle une telle boite de montre serait capable de préserver une température de fonctionnement de ses composants 2 en étant située directement dans un tel environnement où règnent de telles températures notamment extrêmes (c'est-à-dire en étant située hors du boitier du dispositif de Dewar). On conçoit ainsi qu'une telle configuration permet de protéger les composants mécaniques et/ou fonctionnels 2 de la montre 3, ainsi que de participer à assurer leur fonctionnement de manière optimale dans des conditions de température extérieure extrêmes.

## Revendications

1. Dispositif de Dewar (1) pour des composants mécaniques et/ou fonctionnels (2) d'une montre (3), ledit dispositif (1) étant formé par la combinaison de son boitier (4) et d'une boite (6) de la montre (3) afin de réaliser une isolation thermique idoine pour ces composants mécaniques et/ou fonctionnels (2), ledit boitier (4) étant pourvu d'un bracelet et d'un boitier (4) comportant une glace (10a), un fond (10b) et une carrure (10c) reliée audit bracelet, le boitier (4) comprenant une enceinte (5) dans laquelle est susceptible d'être agencée une boite (6) de ladite montre (3) et au moins un dispositif de fixation (7) fixant ladite boite (6) de montre (3) dans ladite enceinte (5) du boitier (4) en la maintenant éloignée de l'ensemble des éléments (10a, 10b, 10c) du boitier (4) définissant cette enceinte (5), ledit ensemble (10a, 10b, 10c) comprenant la glace (10a) en matériau céramique transparente notamment en matériau céramique polycristalline transparente et dans ce dispositif une glace (11) de la boite (6) de montre (3) est disposée en regard de la glace (10a) du boitier (4) lorsque la boite (6) de montre (3) est agencée dans ladite enceinte (5).

2. Dispositif de Dewar (1) selon la revendication précédente, **caractérisé en ce que** ladite glace (10a) est fabriquée en matériau céramique comprenant essentiellement de l'oxynitrure d'aluminium.

3. Dispositif de Dewar (1) selon l'une quelconque des revendications précédentes, **caractérisé en ce que** ladite glace (10a) est fabriquée en matériau céramique comprenant essentiellement de l'alumine-magnésie.

4. Dispositif de Dewar (1) selon l'une quelconque des revendications précédentes, **caractérisé en ce que** ladite glace (10a) est fabriquée en matériau céramique comprenant essentiellement de l'oxyde d'yttrium.

5. Dispositif de Dewar (1) selon l'une quelconque des revendications précédentes, **caractérisé en ce que** ladite glace (10a) est fabriquée en matériau céramique comprenant essentiellement du grenat d'yttrium et d'aluminium.

6. Dispositif de Dewar (1) selon l'une quelconque des revendications précédentes, **caractérisé en ce que** ladite glace (10a) présente un indice de dureté de Vickers compris entre 1223 et 1632 kgf.mm⁻² et qui est de préférence de 1530 kgf.mm⁻².

7. Dispositif de Dewar (1) selon l'une quelconque des revendications précédentes, **caractérisé en ce que** ladite glace (10a) présente un facteur de transmission de la lumière dans le spectre visible qui est d'environ 85% pour une épaisseur d'environ 2 mm.

8. Dispositif de Dewar (1) selon la revendication précédente, **caractérisé en ce que** ladite glace (10a) présente un coefficient d'absorption de la lumière dans le spectre visible qui ne dépasse pas 65% après frittage et polissage.

9. Dispositif de Dewar (1) selon l'une quelconque des revendications précédentes, **caractérisé en ce que** la glace (10a) a une surface sensiblement supérieure ou strictement supérieure à celle de la glace (11) de la boite (6) de montre (3).

10. Dispositif de Dewar (1) selon l'une quelconque des revendications précédentes, **caractérisé en ce que** ladite enceinte (5) est sous vide ou quasi sous vide.

11. Dispositif de Dewar (1) selon l'une quelconque des revendications précédentes, **caractérisé en ce que** le au moins un dispositif de fixation (7) est agencé sur une paroi périphérique intérieure (12) de l'enceinte du boitier (4).

## Patentansprüche

1. Dewar-Vorrichtung (1) für mechanische und/oder funktionelle Komponenten (2) einer Uhr (3), wobei die Vorrichtung (1) durch die Kombination ihres Gehäuses (4) und einer Box (6) der Uhr (3) gebildet wird, um eine geeignete Wärmeisolierung für diese mechanischen und/oder funktionellen Komponenten (2) zu realisieren, wobei das Gehäuse (4) mit einem Armband und einem Gehäuse (4) versehen ist, das ein Glas (10a), einen Boden (10b) und einen mit dem Armband verbundenen Mittelteil (10c) beinhaltet, das Gehäuse (4) einen abgeschlossenen Raum (5) umfasst, in dem eine Box (6) der Uhr (3) und mindestens eine Befestigungsvorrichtung (7) angeordnet werden können, welche die Box (6) der Uhr (3) in dem abgeschlossenen Raum (5) des Gehäuses (4) befestigt, indem sie diese von der Einheit der Elemente (10a, 10b, 10c) des Gehäuses (4), die diesen abgeschlossenen Raum (5) definieren, fernhält, wobei die Einheit (10a, 10b, 10c) das Glas (10a) aus einem transparenten keramischen Werkstoff, insbesondere aus einem transparenten polykristallinen keramischen Werkstoff, umfasst und in dieser Vorrichtung ein Glas (11) der Box (6) der Uhr (3) gegenüber dem Glas (10a) des Gehäuses (4) angeordnet ist, wenn die Box (6) der Uhr (3) in dem abgeschlossenen Raum (5) angeordnet ist.

2. Dewar-Vorrichtung (1) nach dem vorstehenden Anspruch, **dadurch gekennzeichnet, dass** das Glas (10a) aus einem keramischen Werkstoff hergestellt ist, der im Wesentlichen Aluminiumoxynitrid umfasst.

3. Dewar-Vorrichtung (1) nach einem der vorstehenden Ansprüche, **dadurch gekennzeichnet, dass** das Glas (10a) aus einem keramischen Werkstoff hergestellt ist, der im Wesentlichen Aluminiumoxid-Magnesiumoxid umfasst.

4. Dewar-Vorrichtung (1) nach einem der vorstehenden Ansprüche, **dadurch gekennzeichnet, dass** das Glas (10a) aus einem keramischen Werkstoff hergestellt ist, der im Wesentlichen Yttriumoxid umfasst.

5. Dewar-Vorrichtung (1) nach einem der vorstehenden Ansprüche, **dadurch gekennzeichnet, dass** das Glas (10a) aus einem keramischen Werkstoff hergestellt ist, der im Wesentlichen Yttrium- und Aluminiumgranat umfasst.

6. Dewar-Vorrichtung (1) nach einem der vorstehenden Ansprüche, **dadurch gekennzeichnet, dass** das Glas (10a) einen Vickers-Härte-Index aufweist, der zwischen 1223 und 1632 kgf.mm⁻² liegt, und der vorzugsweise 1530 kgf.mm⁻² beträgt.

7. Dewar-Vorrichtung (1) nach einem der vorstehenden Ansprüche, **dadurch gekennzeichnet, dass** das Glas (10a) einen Durchlässigkeitsfaktor für Licht im sichtbaren Spektrum aufweist, der bei einer Dicke von etwa 2 mm etwa 85 % beträgt.

8. Dewar-Vorrichtung (1) nach dem vorstehenden Anspruch, **dadurch gekennzeichnet, dass** das Glas (10a) einen Absorptionskoeffizienten für Licht im sichtbaren Spektrum aufweist, der nach dem Sintern und Polieren nicht mehr als 65 % beträgt.

9. Dewar-Vorrichtung (1) nach einem der vorstehenden Ansprüche, **dadurch gekennzeichnet, dass** das Glas (10a) eine im Wesentlichen größere oder streng größere Oberfläche als jene des Glases (11) der Box (6) einer Uhr (3) aufweist.

10. Dewar-Vorrichtung (1) nach einem der vorstehenden Ansprüche, **dadurch gekennzeichnet, dass** der abgeschlossene Raum (5) unter Vakuum oder Quasi-Vakuum steht.

11. Dewar-Vorrichtung (1) nach einem der vorstehenden Ansprüche, **dadurch gekennzeichnet, dass** die mindestens eine Befestigungsvorrichtung (7) an einer inneren Umfangswand (12) des abgeschlossenen Raumes des Gehäuses (4) angeordnet ist.

## Claims

1. Dewar device (1) for mechanical and/or functional components (2) of a watch (3), said device (1) being formed by the combination of its casing (4) and of a case (6) of the watch (3) in order to suitably thermally insulate these mechanical and/or functional components (2), said casing (4) being provided with a bracelet and a casing (4) including a crystal (10a), a back (10b) and a middle (10c) connected to said bracelet, the casing (4) comprising an enclosure (5) in which a case (6) of said watch (3) is capable of being arranged and at least one fastening device (7) fastening said case (6) of the watch (3) inside said enclosure (5) of the casing (4) while keeping it away from the set of elements (10a, 10b, 10c) of the casing (4) defining this enclosure (5), said set (10a, 10b, 10c) comprising the crystal (10a) made of a transparent ceramic material, in particular a transparent polycrystalline ceramic material and in which device is disposed a crystal (11) of the case (6) of the watch (3) such that it faces the crystal (10a) of the casing (4) when the case (6) of the watch (3) is arranged inside said enclosure (5).

2. Dewar device (1) according to the preceding claim, **characterised in that** said crystal (10a) is made of a ceramic material containing essentially aluminium oxynitride.

3. Dewar device (1) according to any one of the preceding claims, **characterised in that** said crystal (10a) is made of a ceramic material containing essentially alumina-magnesia.

4. Dewar device (1) according to any one of the preceding claims, **characterised in that** said crystal (10a) is made of a ceramic material containing essentially yttrium oxide.

5. Dewar device (1) according to any one of the preceding claims, **characterised in that** said crystal (10a) is made of a ceramic material containing essentially yttrium aluminium garnet.

6. Dewar device (1) according to any one of the preceding claims, **characterised in that** said crystal (10a) has a Vickers hardness number comprised between 1,223 and 1,632 kgf.mm⁻² and which is preferably of 1,530 kgf.mm⁻².

7. Dewar device (1) according to any one of the preceding claims, **characterised in that** said crystal (10a) has a light transmittance in the visible spectrum of about 85% for a thickness of about 2 mm.

8. Dewar device (1) according to the preceding claim, **characterised in that** said crystal (10a) has a light absorption coefficient in the visible spectrum of no more than 65% after sintering and polishing.

9. Dewar device (1) according to any one of the preceding claims, **characterised in that** the crystal (10a) has a surface area that is substantially larger or strictly larger than that of the crystal (11) of the case (6) of the watch (3).

10. Dewar device (1) according to any one of the preceding claims, **characterised in that** said enclosure (5) is under vacuum or near vacuum.

11. Dewar device (1) according to any one of the preceding claims, **characterised in that** the at least one fastening device (7) is arranged on an inner peripheral wall (12) of the enclosure of the casing (4).
